# EUROPEAN PATENT APPLICATION

(11) **EP 4 667 336 A1**
(43) Date of publication of application: **24.12.2025**
(21) Application number: 25178503.6
(22) Date of filing: 23.05.2025
(51) Int. Cl.: B62J 15/02

(54) **BICYCLE MUDGUARD**

(30) Priority: 18.06.2024 IT 202400013969
(71) Applicant: Marcon Srl, 36022 Cassola (VI) (IT)
(72) Inventor: MOZZATO, Germano, 35030 SACCOLONGO (PD) (IT); MARCON, Damiano, 31037 LORIA (TV) (IT)
(74) Representative: Marchioro, Paolo

(57) **Abstract**

The present invention concerns a bicycle mudguard (10) comprising:
- a shield (20) configured to be installed on a bicycle in such a way as to stop the debris raised by a wheel of this bicycle from being projected outwards while the latter is moving;
- a rod (30) having a curved section (30a) along its longitudinal extension and at least one free end (30b) configured to be fixed to the frame of said bicycle;
- interconnection means (40) configured to fix the shield (20) to the rod (30) in such a way as to define a coupled configuration for the mudguard (10);

said shield (20) having a through opening (21) defined between said outer side (20a) and said inner side (20b), said interconnection means (40) comprising a first element (40a) and a second element (40b) configured to be coupled together by interference, said coupled configuration being defined by the coupling of said first element (40a) and said second element (40b) through said through opening (21), with said first element (40a) arranged at said outer side (20a), said second element (40b) arranged at said inner side (20b) and said curved section (30a) interposed between said second element (40b) and said inner side (20b), said first element (40a) comprising at least one first pair of tabs (41), each of which is provided with a first groove (41a), said second element (40b) having at least one pair of cavities (42) inside each of which a protrusion (42a) is defined, said coupled configuration being defined by the insertion of said first pair of tabs (41) into said pair of cavities (42), with said protrusion (42a) inside said first groove (41a), in such a way that said first element (40a) and said second element (40b) are coupled together by interference, each tab of said first pair of tabs (41) is provided with a second groove (41b), said coupled configuration being defined by the insertion of said first pair of tabs (41) into said through opening (21) with the perimeter edge of said through opening (21) arranged inside said second groove (41 b).

## Description

The invention concerns a bicycle mudguard.

Nowadays, bicycle mudguards are known which, once installed on a bicycle, can protect its frame as well as its rider from solid and liquid debris raised by a wheel of said bicycle while it is moving.

Such a mudguard of the known type comprises:
- a shield configured to be installed on a bicycle in such a way as to stop the debris raised by a wheel of said bicycle from being projected outwards while the latter is moving;
- a rod having a curved section along its longitudinal extension and at least one free end configured to be fixed to the frame of the bicycle;
- interconnection means configured to fix the shield to the rod in such a way as to define a coupled configuration for the mudguard.

However, such a mudguard, although well known and appreciated, has an important limitation.

More specifically, with the interconnection means of such a mudguard of the known type, fixing the shield to the rod typically takes a long time.

An equal disadvantage lies in that said interconnection means also make the process of detaching the shield from the rod very slow, and sometimes even irreversible.

The task of the present invention is to develop a mudguard that is capable of overcoming the above-mentioned drawbacks and limitations of the known technique.

In particular, it is the object of the present invention to provide a mudguard having interconnection means with which, compared to similar mudguards of the known type, fixing the shield to the rod takes less time.

It is another object of the invention to provide a mudguard having interconnection means with which, compared to similar mudguards of the known type, detaching the shield from the rod takes less time.

The task and the objects mentioned above are fulfilled by a mudguard according to claim 1.

Further characteristics of the mudguard according to claim 1 are described in the dependent claims.

The task and the above-mentioned objects, together with the advantages that will be mentioned below, are highlighted in the description of an embodiment of the invention, which is provided by way of non-limiting example, with reference to the attached drawings, wherein:
- Figure 1 shows a perspective view of a mudguard according to the invention;
- Figure 2 shows a sectional view of a detail of the mudguard shown in Figure 1;
- Figure 3a shows a side sectional view of the mudguard shown in Figure 1;
- Figure 3b shows a side exploded sectional view of the mudguard shown in Figure 3a.

With reference to the above-mentioned figures, a bicycle mudguard according to the invention is indicated as a whole by the number **10.**

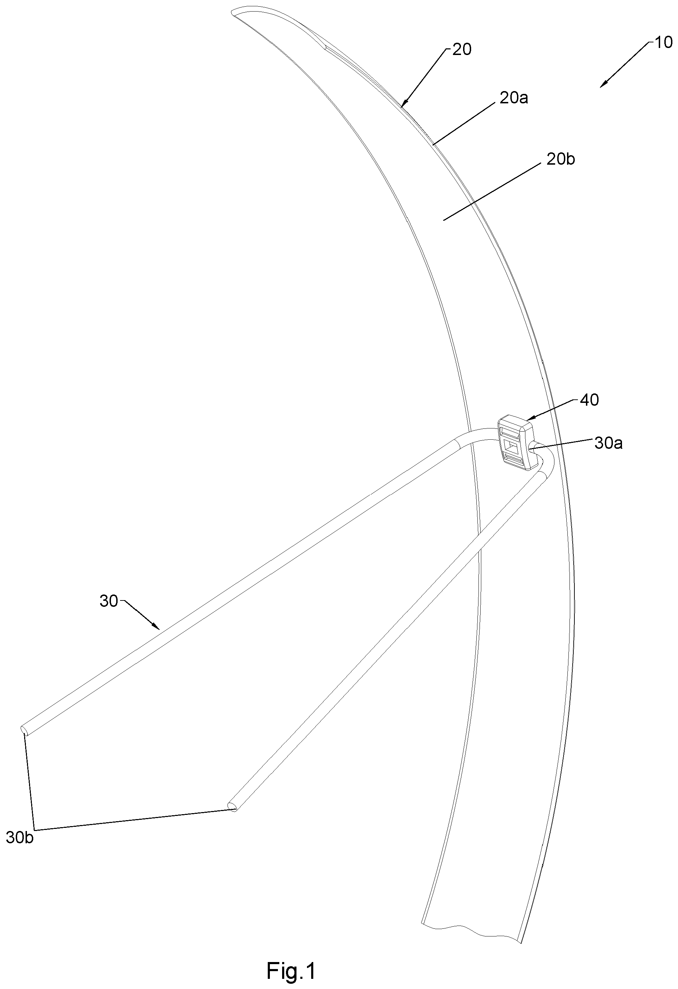

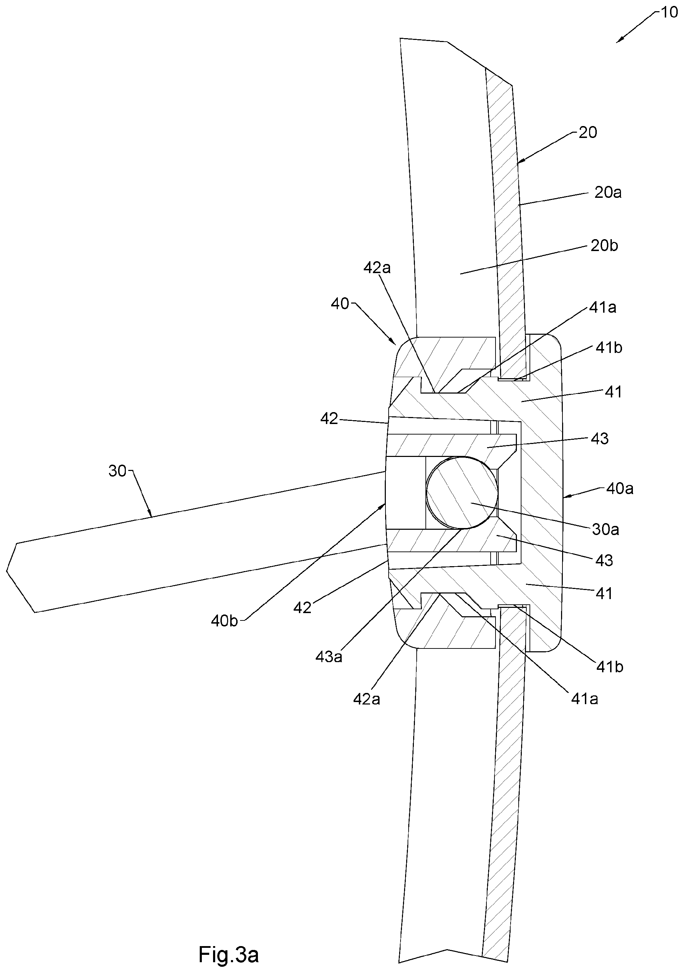

Said mudguard **10** comprises:
- a shield **20,** clearly visible in Figures 1, 2, 3 and 4, configured to be installed on a bicycle in such a way as to stop the debris raised by a wheel of said bicycle from being projected outwards while the latter is moving; in particular, the shield **20** has an outer side **20a** and an opposing inner side **20b,** as is also clearly shown in Figures 1, 2, 3 and 4;
- a rod **30,** clearly visible in Figures 1, 2, 3 and 4, having a curved section **30a** along its longitudinal extension, also clearly shown in Figures 1, 2, 3 and 4, with at least one free end **30b** configured to be fixed to the frame of said bicycle and clearly visible in Figure 1;
- interconnection means **40,** clearly visible in Figures 1, 2, 3 and 4, configured to fix the shield **20** to the rod **30** in such a way as to define a coupled configuration of the mudguard **10,** clearly shown in Figures 1 and 3a.

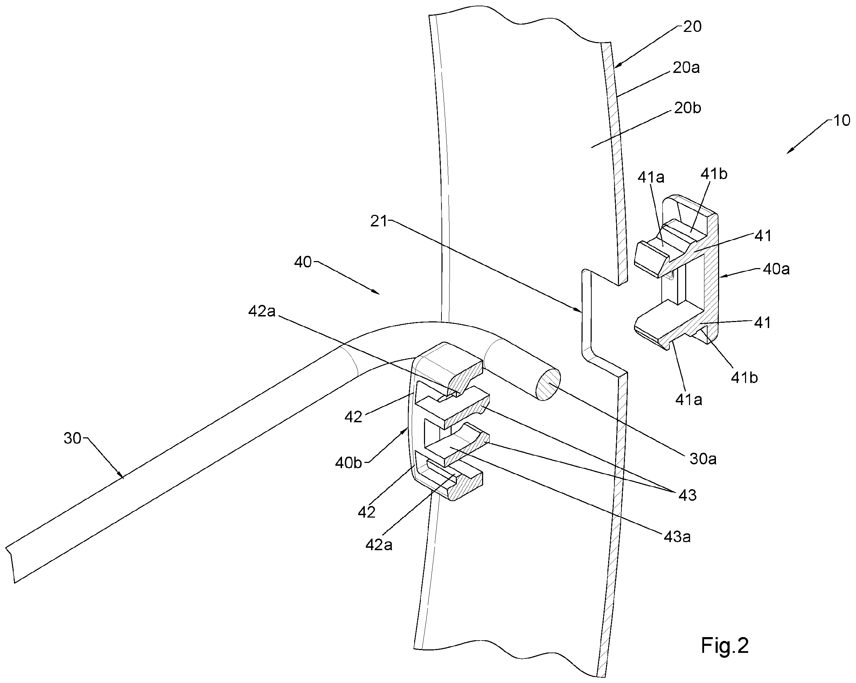

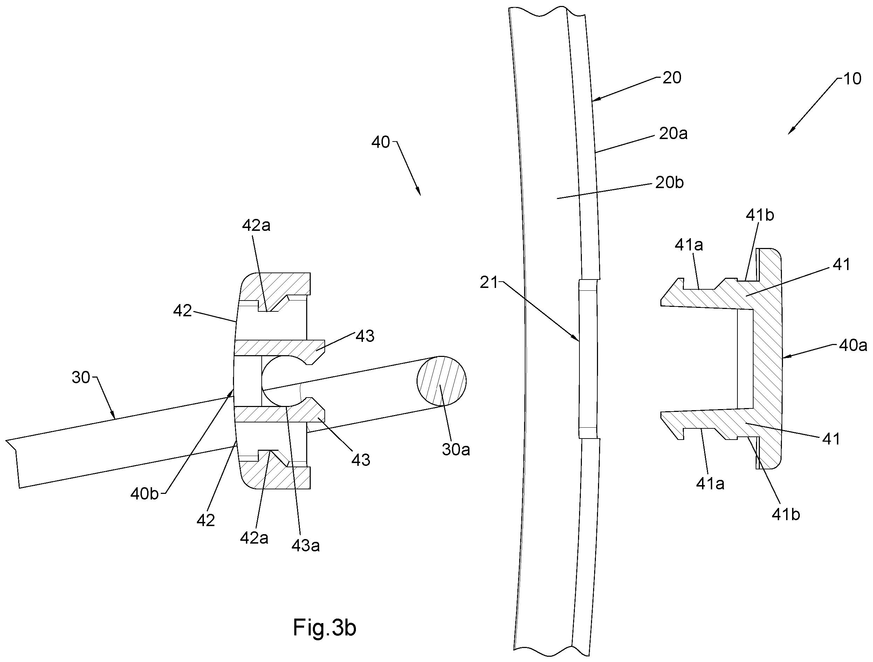

It should be noted that the shield **20** has a through opening **21,** shown in Figures 2 and 3b, defined between the outer side **20a** and the inner side **20b** of said shield **20.**

Furthermore, the interconnection means **40** comprise a first element **40a** and a second element **40b,** both visible in Figures 2, 3a and 3b, configured to be coupled together by interference.

Even more specifically, said coupled configuration is defined by the coupling of the first element **40a** and the second element **40b** through said through opening **21,** with the first element **40a** arranged at said outer side **20a,** the second element **40b** arranged at said inner side **20b,** and the curved section **30a** of the rod **30** interposed between the second element **40b** and the inner side **20b.**

In the present mudguard **10** according to the invention, the interconnection means **40,** due to their snap-fit configuration, make it possible to complete the procedure required for fixing the shield **20** to the rod **30** more rapidly compared to similar mudguards of the known type.

Furthermore, said interconnection means **40,** in addition to ensuring the reversibility of the fixing procedure, also make it possible to complete the procedure required for detaching the shield **20** from the rod **30** more rapidly compared to similar mudguards of the known type.

In the present example of embodiment of the invention, the first element **40a** and the second element **40b** are shaped in such a way as to define a seat **43a** for the curved section **30a** of the rod **30** when the mudguard **10** is in said coupled position.

In addition, the first element **40a** and the second element **40b** are configured to snap and lock the curved section **30a** of the rod **30** inside the seat **43a,** as clearly shown in Figures 2, 3a and 3b.

Said shape advantageously makes it possible to fix the curved section **30a** of the rod **30** between the first element **40a** and the second element **40b** in a more stable manner compared to similar systems without said shape. This feature is even more advantageous, as it defines the above-mentioned configuration thanks to which said curved section **30a** can be snapped into the seat **43a.**

It cannot be excluded, however, that the first element **40a** and the second element **40b** may not be configured so that the curved section **30a** of the rod **30** can be snapped into the seat **43a,** or that the seat **43a** defined by the first element **40a** and the second element **40b** may be entirely absent.

Again, according to the present example of embodiment of the invention, the first element **40a** comprises at least one first pair of tabs **41,** clearly visible in Figures 2, 3a and 3b, each of which is provided with a first groove **41a.**

In addition, the second element **40b** has a pair of cavities **42,** also visible in Figures 2, 3a and 3b, inside each of which a protrusion **42a** is defined.

More specifically, said coupled configuration is defined by the insertion of the first pair of tabs **41** into the pair of cavities **42,** with the protrusion **42a** inside the first groove **41a** in such a way that the first element **40a** and the second element **40b** are coupled together by interference.

In an alternative example of embodiment of the invention, the second element **40b** comprises said first pair of tabs **41,** each of which is provided with the first groove **41a.**

Furthermore, the first element **40a** has the pair of cavities **42,** inside each of which the protrusion **42a** is defined.

Furthermore, as in the embodiment of the invention illustrated above, the coupled configuration is defined by the insertion of the first pair of tabs **41** into the pair of cavities **42,** with the protrusion **42a** inside the first groove **41a** in such a way that the first element **40a** and the second element **40b** are coupled together by interference.

In general, the presence of the first pair of tabs **41** and of the corresponding cavities **42** makes the interconnection means **40** faster to use, compared to similar mudguards of the known type, in relation to the process required for fixing the shield **20** to the rod **30.**

Each tab of the first pair of tabs **41** is also provided with a second groove **41b,** clearly visible in Figures 2, 3a and 3b, wherein the coupled configuration is defined by the insertion of the first pair of tabs **41** into the through opening **21,** with the perimeter edge of the through opening **21** itself arranged into the second groove **41b.**

Advantageously, this makes it possible to obtain a more stable coupled configuration of the mudguard **10.**

In the present example of embodiment of the invention, the first element **40a** comprises a second pair of tabs **43,** clearly visible in Figures 2, 3a and 3b, shaped in such a way as to define said seat **43a** for the curved section **30a** of the rod **30** when the mudguard **10** is in the coupled position.

Alternatively, the second element **40b** may comprise said second pair of tabs **43** shaped in such a way as to define the seat **43a** for said curved section **30a** when the mudguard **10** is in the coupled position.

In practice, it has been shown that the invention fulfils its task and achieves the set objects.

In particular, the invention provides a mudguard having interconnection means with which, compared to similar mudguards of the known type, fixing the shield to the rod takes less time.

In addition, a mudguard has been developed having interconnection means with which, compared to similar mudguards of the known type, detaching the shield from the rod takes less time.

## Claims

1. Bicycle mudguard (10), comprising:
- a shield (20) configured to be installed on a bicycle in such a way as to stop the debris raised by a wheel of said bicycle from being projected outwards while said bicycle is moving, said shield (20) having an outer side (20a) and an opposing inner side (20b);
- a rod (30) having a curved section (30a) along its longitudinal extension and at least one free end (30b) configured to be fixed to the frame of said bicycle;
- interconnection means (40) configured to fix said shield (20) to said rod (30) in such a way as to define a coupled configuration for said mudguard (10);
said shield (20) having a through opening (21) defined between said outer side (20a) and said inner side (20b), said interconnection means (40) comprising a first element (40a) and a second element (40b) configured to be coupled together by interference, said coupled configuration being defined by the coupling of said first element (40a) and said second element (40b) through said through opening (21), with said first element (40a) arranged at said outer side (20a), said second element (40b) arranged at said inner side (20b) and said curved section (30a) interposed between said second element (40b) and said inner side (20b), said first element (40a) comprising at least one first pair of tabs (41), each of which is provided with a first groove (41a), said second element (40b) having at least one pair of cavities (42) inside each of which a protrusion (42a) is defined, said coupled configuration being defined by the insertion of said first pair of tabs (41) into said pair of cavities (42), with said protrusion (42a) inside said first groove (41a), in such a way that said first element (40a) and said second element (40b) are coupled together by interference,
**characterized in that** each tab of said first pair of tabs (41) is provided with a second groove (41b), said coupled configuration being defined by the insertion of said first pair of tabs (41) into said through opening (21) with the perimeter edge of said through opening (21) arranged inside said second groove (41b).

2. Mudguard (10) according to claim 1, **characterized in that** said first element (40a) and said second element (40b) are shaped in such a way as to define a seat (43a) for said curved section (30a) when said mudguard (10) is in said coupled position.

3. Mudguard (10) according to claim 2, **characterized in that** said first element (40a) and said second element (40b) are configured to snap and lock said curved section (30a) within said seat (43a).

4. Mudguard (10) according to any one of claims 2 or 3, **characterized in that** said first element (40a) comprises a second pair of tabs (43) shaped in such a way as to define said seat (43a) for said curved section (30a) when said mudguard (10) is in said coupled position.

5. Mudguard (10) according to any one of claims 2 or 3, **characterized in that** said second element (40b) comprises a second pair of tabs (43) shaped in such a way as to define said seat (43a) for said curved section (30a) when said mudguard (10) is in said coupled position.
